# EUROPEAN PATENT SPECIFICATION

(11) **EP 4 646 528 B1**
(45) Date of publication and mention of the grant of the patent: **04.02.2026**
(21) Application number: 24729066.1
(22) Date of filing: 21.05.2024
(51) Int. Cl.: F01N 3/035, F01N 3/20, F01N 13/00, B01D 53/94, F01N 3/10

(54) **SYSTEM FOR TREATING AN EXHAUST GAS**
SYSTEM ZUR BEHANDLUNG EINES ABGASES
SYSTÈME DE TRAITEMENT D'UN GAZ D'ÉCHAPPEMENT

(30) Priority: 01.06.2023 US 202363505460 P; 23.06.2023 EP 23181282
(43) Date of publication of application: 12.11.2025
(73) Proprietor: Johnson Matthey Public Limited Company, London EC2V 7AD (GB)
(72) Inventor: AYDIN, Ceren, Wayne, Pennsylvania 19087 (US); BANNON, Patrick, Wayne, Pennsylvania 19087 (US); MARKATOU, Penelope, Wayne, Pennsylvania 19087 (US)
(74) Representative: Johnson Matthey Plc
(86) International application number: PCT/GB2024/051313
(87) International publication number: WO 2024/246488

(56) References cited:
- WO-A1-2008/103110
- WO-A1-2019/159151
- US-A1- 2017 298 796
- US-B1- 11 181 026

## Description

The present invention relates to a system for treating an exhaust gas to achieve low NOx, NH₃ and N₂O emissions, without the need for a separate ammonia slip catalyst component. As a consequence, a system can be produced which has reduced complexity and/or a reduced platinum group metal loading requirement, while achieving the same or better performance.

Combustion engines produce exhaust gases that contain pollutants, such as carbon monoxide (CO), unburned hydrocarbons (HCs), oxides of nitrogen (NOx) and particulate matter (PM). Emissions standards for pollutants in an exhaust gas produced by a combustion engine, particularly for vehicular engines, are becoming increasingly stringent. There is a need to provide improved catalysts and exhaust systems for treating and removing the pollutants in such exhaust gases that can meet these standards and which are cost-effective. It is particularly desirable that these catalysts show consistent performance over their lifetime.

The exhaust gas from gasoline and diesel engines is commonly treated with a range of catalysts to address different components of the exhaust system. Some of these catalysts contain one or more platinum group metals. The specific platinum group metal(s) (PGMs) selected for inclusion will depend on a variety of factors, such as reactivity toward specific pollutants and under differing exhaust gas conditions, cost, durability at high temperatures, chemical compatibility with the support material and any other components of the catalyst, and susceptibility to poisoning by impurities.

Strategies for meeting current emissions standards for heavy-duty and light-duty diesel engines typically adopt an exhaust system architecture comprising a series of catalysed substrates and injectors. In order, from upstream to downstream (upstream being relative to an engine connected or connectable to the exhaust system), a typical exhaust system comprises a hydrocarbon fuel injector, a diesel oxidation catalyst (DOC), a catalysed soot filter (CSF, i.e. a catalysed diesel particulate filter (DPF)), a urea (ammonia precursor, nitrogenous reductant) injector, one or more selective catalytic reduction (SCR) catalyst and an ammonia slip (ASC) catalyst. The provision of each of these components is associated with a cost, especially where significant loadings of PGMs are required.

A diesel oxidation catalyst (DOC) performs oxidation reactions to oxidise (i) carbon monoxide (CO) to carbon dioxide (CO₂); and (ii) hydrocarbons (HCs) to water (H₂O) and carbon dioxide (CO₂); and oxidize nitric oxide (NO) to nitrogen dioxide (NO₂).

An ammonia slip catalyst (ASC), also known in the art as an ammonia oxidation (AMOx) catalysts, is designed to oxidise ammonia that has passed through an upstream SCR catalyst without conversion, e.g. of NOx to N₂ and residual water (H₂O).

Diesel particulate matter filter systems for vehicles capture and build up small particles in the form of soot. It is necessary for a filter to be provided with certain regeneration techniques. "Regeneration" is the selected method of combusting diesel particulate matter held on a filter. Regeneration techniques can be broadly divided into the categories of passive, active and combinations of both passive and active. In passive systems, the oxidation temperature of the particulate matter is lowered to a level where the filter can be auto-regenerated during regular vehicle operation. Examples of such passive systems include catalysing the filter medium (a so-called catalysed soot filter or "CSF"); addition of a catalyst fuel additive so that the particulate matter on the filter includes in its composition catalyst for promoting soot combustion; and generating NO₂ upstream of the filter for combusting the particulate matter held on the filter: particulate matter combusts in NO₂ at lower temperatures than in oxygen. This is the so-called CRT^{®} effect (see e.g.

EP 0341832). The rate of passive regeneration is dependent on exhaust gas temperature in the system, which in turn can be influenced several factors including engine design, filtration efficiency during normal operation, engine load during normal operation etc.

SCR catalysts are designed to catalyse the reduction of NOx selectively using a nitrogenous reductant, typically this may be derived from an ammonia precursor such as urea, which reductant is injected into a flowing exhaust gas upstream from the SCR catalyst in an amount to promote the principal NOx reduction reactions of:

(1) 4NH₃ + 4NO + O₂ → 4N₂ + 6H₂O;

(2) 4NH₃ + 2NO₂ + O₂ → 3N₂ + 6H₂O;

and

(3) NO + NO₂ + 2NH₃ → 2N₂ + 3H₂O

(the preferred, so-called "fast SCR reaction").

US 2004/098973 discloses a system for effective NOx and particulate matter control in a diesel or other lean burn internal combustion engine is presented. The system includes a urea-based SCR catalyst having an oxidation catalyst coupled upstream of it and a particulate filter coupled downstream of the SCR catalyst. This system configuration results in improved NOx conversion due to fast SCR catalyst warm-up and higher operating temperatures. Additionally, placing the particulate filter last in this system configuration reduces tailpipe ammonia emissions as well as prevents any thermal damage to the SCR catalyst due to the particulate filter regeneration. The filter component may be coated by a PGM but the focus is on Pt-containing catalysts.

EP 3134624 discloses an exhaust treatment system which comprises: (i) a first dosage device (371) arranged to supply a first additive into the exhaust stream; (ii) a first reduction catalyst device (331), arranged downstream of said first dosage device for reduction of nitrogen oxides (NOx) through the use of the additive; (iii) a particulate filter (320) at least partly comprising a catalytically oxidising coating, which is arranged downstream of said first reduction catalyst device (331); (iv) a second dosage device (372) arranged downstream of said particulate filter (320) and arranged to supply a second additive into said exhaust stream; and (v) a second reduction catalyst device (332), arranged downstream of said second dosage device (372), and arranged for reduction of nitrogen oxides in said exhaust stream through the use of least one of said first and said second additive.

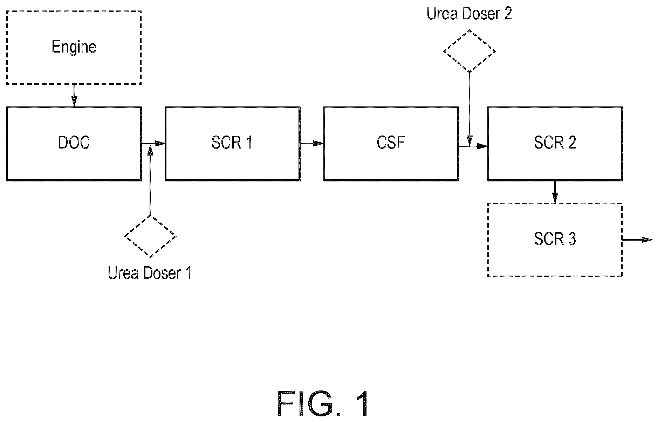

WO 03/054364 discloses a method of selectively catalysing the reduction of NOx in an exhaust gas flowing in an exhaust system of an internal combustion engine comprising a filter (40) for particulate matter comprising a second catalyst capable of selectively catalysing the reduction of NOx with a reducing agent, which method comprising introducing a reducing agent, or a precursor thereof, into the exhaust gas and contacting the resulting gas with the filter. Fig. 1 depicts an exhaust system including a close-coupled SCR catalyst (12) and an underfloor SCR catalyst (14).

WO 2019/159151 discloses a system for treatment of an exhaust gas stream from an engine, which system containing an upstream selective catalytic reduction (SCR) catalyst, which receives the exhaust gas stream without any intervening catalyst, a diesel oxidation catalyst (DOC) positioned downstream thereof; a catalysed soot filter (CSF) downstream of the diesel oxidation catalyst; a second SCR catalyst positioned downstream of the catalysed soot filter; and an ammonia oxidation (AMOx) catalyst. The document discloses a system for treating an exhaust gas from a vehicular lean burn internal combustion engine, the system comprising, in order:
(i) a first means for injecting a nitrogenous reductant urea;
(ii) a first selective catalytic reduction catalyst called CC-SCR);
(iii) a catalysed soot filter called zoned-CSF; and
(iv) a second selective catalytic reduction catalyst SCR.

The zoned-CSF has a total platinum group metal content of 0.142 g/L (4 g/ft³), and comprises palladium and platinum wherein a weight ratio of palladium to platinum in the CSF is 1:4.

Accordingly, it is an object of the present invention to provide a system for treating an exhaust gas which can avoid the need for a dedicated ammonia slip catalyst or at least to tackle problems associated therewith in the prior art or provide a commercially viable alternative thereto.

According to a first aspect the present invention provides a system for treating an exhaust gas from a vehicular lean burn internal combustion engine, the system comprising, in order:
(i) a first means for injecting a nitrogenous reductant;
(ii) a first selective catalytic reduction (SCR) catalyst;
(iii) a catalysed soot filter (CSF) comprising a filter substrate; and
(iv) a second selective catalytic reduction (SCR) catalyst,
wherein a total platinum group metal content of the CSF is from 0.011 to 0.071 g/L (0.3 to 2g/ft³), and the CSF comprises palladium only or both palladium and platinum, wherein when the CSF comprises both palladium and platinum a weight ratio of palladium to platinum is greater than 1:1.

The present disclosure will now be described further. In the following passages different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous. It is intended that the features disclosed in relation to the product may be combined with those disclosed in relation to the method and vice versa.

In the following, a CSF comprising palladium and, optionally, platinum, wherein a weight ratio of palladium to platinum in the CSF is greater than 1:1, is referred to by the short-hand "Pd-rich".

In a system with a nitrogenous doser and an SCR, there may be ammonia slip. While this can be addressed with an ASC, this is an expensive further component to include not only due to its PGM content, but also due to the additional volume it occupies in the system and additional system complexity it brings with the on-board diagnostics that need to be engineered around this component. The presence of an ASC, in addition to all the other components in the exhaust system, also undesirably generates additional backpressure in the system.

The inventors have realised that a CSF is able to perform not only the function of a CSF (i.e. oxidising CO and HC to CO₂ and H₂O), but also the functions of an ammonia slip catalyst (ASC). This is desirable because a filter component would normally be present in an exhaust system anyway, so there is limited associated additional cost, volume and backpressure. That is, the present invention proposes utilization of an existing CSF component performing in part as an ammonia slip catalyst, due to a similar PGM composition, but without integrating a dedicated/additional ASC catalyst.

However, the inventors have further found that the CSF needs to be Pd-only or at least Pd-rich as these are more selective for the oxidation of NH₃ to N₂ (rather than the oxidation of NH₃ to NOx and N₂O). Consequently, there is less NOx re-make (i.e. producing NOx after the engine-output NOx was reduced by SCR) and N₂O make (N₂O is a powerful "Greenhouse" gas, having a "Global Warming Potential ("GWP") 273 times that of CO₂ over a 100-year timescale according to the United States Environmental Protection Agency. Engine output typically does not contain more than trace N₂O). It is also the case that, unlike a Pt-containing CSF, the Pd-only does not produce any NO₂.

While the use of a Pd-rich CSF produces less N₂O, it also consumes less of the NH₃. Therefore, an exhaust system configuration with an SCR downstream of the CSF can utilise the slipped NH₃. This means that a second nitrogenous doser may not be required, or at least it can be used to a lesser extent; leading to better utilization of nitrogenous reductant in the system. Furthermore, while achieving the same CO and HC conversion, the amount of PGMs required in the Pd-only configuration is significantly reduced.

The overall NOx conversion across the system is significantly higher on a test cycle, such as US06 cycle (where NH₃ slip occurs from the first SCR catalyst into CSF downstream due to elevated inlet temperature across the components in this cycle), for Pd-only CSF compared to one containing Pt. Without wishing to be bound by theory, it is believed that this is because of the more selective NH₃ oxidation across Pd-only CSF, in turn yielding in less NOx re-make.

Therefore, the inventors have found a particular combination of a more specific CSF that can act as a highly selective ASC replacement (one fewer components) to avoid N₂O and NO₂ production, and a system configuration (also referred to as "system architecture" herein, i.e. the in-series order of components) that can handle or even benefit from the slipped NH₃. HC and CO conversion of the CSF is generally not compromised.

In comparison to US 2004/098973, the present system requires a Pd-rich, preferably Pd-only, CSF and a downstream SCR component. The indication in US 2004/098973 to use a Pt-only CSF would mean that NH₃ exposed to the CSF could cause a severe amount of NOx re-make and higher N₂O make. This would, the inventors have found, negate the good work the system does up until after SCR.

In comparison to EP 3134624 in which the DPF may be coated with a precious metal, but only Pt is specifically disclosed, the present system requires a Pd-rich or Pd-only CSF component. Each SCR catalyst in this document has its own NH₃ injector, whereas it is not essential that the second SCR catalyst of the present invention has this. Moreover, the system architecture of EP 3134624 involves the provision of two ammonia slip catalyst components. The present system avoids the need for these, which is a significant cost saving and leads to simplified on-board diagnostics (OBD) and control system complexity.

In comparison to WO 03/054364, the system described therein does include a DPF (40), but this is coated with an SCR catalyst rather than Pd. Moreover, the DPF is not immediately downstream of the close-coupled (cc) SCR catalyst. - there is an oxidation catalyst (38) in between.

To summarise the benefits of the presently disclosed system, the provision of a Pd-rich or Pd-only coated filter component placed in between two SCR components allows:
- Elimination of need for a dedicated ammonia slip catalyst in the system (decreased system cost and complexity) due to added functionality to CSF with selective NH₃ oxidation
- Decreased NOx re-make and N₂O make (from increased NH₃ oxidation selectivity)
- Maintained (no penalty in) CSF's main function of reducing CO/HC emissions
- Decreased PGM loading/cost in a catalyst component
- Reduced burden/load on second means for injecting a nitrogenous reductant

The present invention provides a system for treating an exhaust gas from a vehicular lean burn internal combustion engine. Vehicular lean burn internal combustion engines are well known in the art and include at least diesel engines of all known configurations. The exhaust systems used to treat the exhaust gases are also of a well-known structure, extending from the exhaust manifold of the engine, which receives the exhaust gases to be treated, to a tail-pipe, through which the treated gases are emitted to the atmosphere.

The system comprises a number of different catalyst components, all of which are well known in the art. The form and structure of the components such as the SCR, DOC etc. are well known in the art. These are discussed in further detailed below but would be immediately familiar to one skilled in the art. While CSF components are conventionally Pt-rich, the skilled person would have no difficulty in providing an equivalent Pd-rich or Pd-only component following the teaching provided herein.

The system comprises, in order:
(i) a first means for injecting a nitrogenous reductant;
(ii) a first selective catalytic reduction (SCR) catalyst;
(iii) a catalysed soot filter (CSF); and
(iv) a second selective catalytic reduction (SCR) catalyst.

Preferably the components are provided without any intervening further catalyst or filter articles or intervening further means for injection. This means that preferably there are no such components provided between the first means for injecting a nitrogenous reductant and the first selective catalytic reduction (SCR) catalyst; or between the first selective catalytic reduction (SCR) catalyst and the catalysed soot filter (CSF); or between the catalysed soot filter (CSF) and the second means for injecting a nitrogenous reductant, where present, or between the catalysed soot filter (CSF) and the second selective catalytic reduction (SCR) catalyst when the second means for injecting a nitrogenous reductant is not present. This does not preclude the presence of an upstream component, such as a DOC upstream of the first means for injecting a nitrogenous reductant and, indeed, this is preferably also present. This does not preclude the presence of a downstream component, such as a further SCR component downstream of the second selective catalytic reduction (SCR) catalyst.

### Injection means

The means for injecting a nitrogenous reductant is a well-known component. It serves to meter an appropriate amount of nitrogenous reductant into the exhaust system. Several reductants are used in SCR applications including ammonia *per* se, hydrazine, anhydrous ammonia, aqueous ammonia or an ammonia precursor selected from the group consisting of urea ((NH₂)₂CO), ammonium carbonate, ammonium carbamate, ammonium hydrogen carbonate and ammonium formate. Pure anhydrous ammonia is toxic and difficult to safely store but needs no further conversion to react with an SCR catalyst. Urea (typically in the form a solution with water) is the safest to store but requires conversion to ammonia through thermal decomposition in order to be used as an effective reductant.

As is conventional, the injector is controlled by a controller, which monitors a number of engine and exhaust parameters and determines the appropriate amount of nitrogenous reductant to inject. Such parameters include, for example, exhaust gas NOx concentration, exhaust gas temperature, catalyst bed temperature, accelerator position, mass flow of exhaust gas in the system, manifold vacuum, ignition timing, engine speed, lambda value of the exhaust gas, the quantity of fuel injected in the engine and the position of the exhaust gas recirculation (EGR) valve and thereby the amount of EGR and boost pressure.

The injector can continuously, periodically, or intermittently introduce the reductant into the exhaust gas at a dose effective for optimization of the downstream SCR reaction. The injector is in fluid communication with the exhaust gas stream and may be attached, connected to, and/or integrated with a conduit, such as a pipe, for directing the exhaust through at least a portion of the exhaust gas system. The injector may also be in fluid communication with a reduction agent supply tank to provide for repeated injections of the reduction agent.

Metering of the amount of nitrogenous reductant introduced into the system can be controlled in response to the quantity of nitrogen oxides in the exhaust gas. The amount of reductant can be determined either directly (using a suitable NOx sensor) or indirectly, such as by using pre-correlated look-up tables or maps stored in a control means that correlate any measurement indicative of a condition of the engine with a predicted NOx content of the exhaust gas.

Controlling the metering involves limiting the introduction of the nitrogenous reductant into the flowing exhaust gas only when it is determined that the SCR catalyst is capable of catalysing NOx reduction at or above a desired efficiency. Metering can be assisted by one or more suitable sensor inputs indicative of a condition of the engine selected from the group consisting of: exhaust gas temperature, catalyst bed temperature, accelerator position, mass flow of exhaust gas in the system, manifold vacuum, ignition timing, engine speed, lambda value of the exhaust gas, the quantity of fuel injected in the engine, the position of the exhaust gas recirculation (EGR) valve and thereby the amount of EGR and boost pressure.

In the present system there is at least a first means for injecting a nitrogenous reductant upstream of the first selective catalytic reduction (SCR) catalyst. In some embodiments there may be a second means for injecting a nitrogenous reductant upstream of the second selective catalytic reduction (SCR) catalyst. In each instance the means is preferably immediately upstream of the corresponding SCR catalyst, but this does not preclude the presence of components such as a static mixer for mixing the reductant into the exhaust gases. In some embodiments there is preferably no second means for injecting a nitrogenous reductant upstream of the second selective catalytic reduction (SCR) catalyst. This is because the use of the specific Pd-rich CSF can avoid the need for the inclusion of this second doser. This is advantageous as a further reduction in the system complexity and cost.

### SCR Catalysts

An SCR catalyst is also well known. The form of the first and second SCR catalysts is discussed below. Each of the SCR catalysts may be independently formulated from the types as discussed below. Furthermore, it may be the case that one or both of the first and second SCR catalysts may be divided across two or more adjacent substrates. In this instance the adjacent substrates do not need to have the same composition. Thus, for example, the second SCR catalyst may be provided out of two SCR components in series (2A and 2B). The exact composition of the SCR catalyst is not critical, provided that it is selected and sized for the intended application.

The two most common designs of SCR catalyst geometry used are honeycomb and plate. The honeycomb form usually is an extruded ceramic applied homogeneously throughout the ceramic carrier or coated on the substrate. Plate-type catalysts have lower pressure drops and are less susceptible to plugging and fouling than the honeycomb types, but plate configurations are much larger and more expensive. Honeycomb configurations are smaller than plate types, but have higher pressure drops and plug much more easily. These supports serve to support an SCR catalyst composition.

An SCR catalyst composition generally comprises a base metal, an oxide of a base metal, a metal supported on a mixed oxide, a molecular sieve, a metal-containing molecular sieve or a mixture thereof. The base metal can be selected from the group consisting of cerium (Ce), chromium (Cr), cobalt (Co), copper (Cu), iron (Fe), manganese (Mn), molybdenum (Mo), nickel (Ni), tungsten (W), and vanadium (V), and mixtures thereof.

SCR compositions consisting of vanadium supported on a refractory metal oxide such as alumina, silica, zirconia, titania, ceria and combinations thereof are well known and widely used commercially in mobile applications. Typical compositions are described in U.S. Pat. Nos. 4,010,238 and 4,085,193. Compositions used commercially, especially in mobile applications, comprise TiO₂ on to which WO₃ and V₂O₅ have been dispersed at concentrations ranging from 5 to 20 wt. % and 0.5 to 6 wt. %, respectively. These catalysts may contain other inorganic materials such as SiO₂ and ZrO₂ acting as binders and promoters.

Other SCR catalysts comprise a molecular sieve or a metal-containing molecular sieve. As is used herein "molecular sieve" is understood to mean a metastable material containing tiny pores of a precise and uniform size that may be used as an adsorbent for gases or liquids. The molecules which are small enough to pass through the pores are adsorbed while the larger molecules are not. As is used herein "metal-containing molecular sieve" means a metal exchanged or metal substituted molecular sieve. The SCR catalyst can comprise an aluminosilicate molecular sieve, an aluminophosphate molecular sieve, a silicoaluminophosphate molecular sieve, a metal-containing aluminosilicate molecular sieve, a metal-containing aluminophosphate molecular sieve, or a metal-containing silicoaluminophosphate molecular sieve.

Preferred SCR catalyst compositions comprise a molecular sieve, preferably a molecular sieve which comprises at least silicon and aluminium, and optionally phosphorous and has an 8-ring pore opening structure. Preferably the molecular sieve has one or more of the following framework types as defined by the Structure Commission of the International Zeolite Association: AEI, AFX, CHA, LEV, LTA. Preferably the framework type is CHA, or CHA in combination with one or more different framework types, such as, for example, AEI-CHA intergrowths.

Aluminosilicate zeolites can have a silica/alumina molar ratio (SAR) defined as SiO₂/Al₂O₃) from at least about 5, preferably at least about 20, with useful ranges of from about 10 to 200.

In addition to the molecular sieve, the SCR catalyst comprises a transition metal imbedded in the sieve. Suitable transition metals include, for example, Cr, Mn, Fe, Co, Ce, Ni, Cu, Zn, Ga, Mo, Ag, In, Sn, Re, Ir, Au, Pr, Nd, W, Bi, and Os. Preferably, the transition metal is Cu or Fe or combinations thereof. In one embodiment, the transition metal loading is about 0.3 wt % to about 5 wt % of the catalyst composition. The type and concentration of the transition metal can vary according to sieve and the application.

### The CSF

The CSF is a filter component and therefore is based on a filter catalyst substrate. Suitable substrates include so-called wall-flow filters.

Suitable filter bodies can include nonwoven fibrous filters and metallic or cordierite honeycombs, as well as other types of diesel particulate filters. Preferred filter substrates are monoliths having a so-called honeycomb geometry which comprises a plurality of adjacent, parallel channels, each channel typically having a square, round, hexagonal, or triangular cross-sectional. The honeycomb shape provides a large catalytic surface with minimal overall size and pressure drop. Other substrates include sheets or screens that can be zoned in any suitable fashion including, for example, stacking, rolling, or arraying about a central axis. Other substrates include packed beds which can be formed with pellets of the adsorbent, preferably held together with a binder or sintered to form a cohesive mass.

Filters for use in the present invention can be fabricated using a variety of materials including sintered metal, ceramic or metal fibres, etc. A preferred type of filter is a so-called "wall-flow" filter made from porous ceramic or other material in the form of a monolithic array of many small channels running substantially parallel over a majority of the length of the filter body, and wherein the channels are capped at alternate ends in a checkerboard fashion. Specific materials of construction for wall-flow monoliths include cordierite, α-alumina, silicon carbide, silicon nitride, zirconia, mullite, spodumene, alumina-silica-magnesia or zirconium silicate, ceramic composite fibres, or a porous refractory metal. Preferred materials include cordierite, silicon carbide, and alumina titanate.

Capping or plugging alternate ends of the channels of the wall-flow filter forces the exhaust gas through the porous ceramic channel walls. Although porous, these walls prevent most of the particulate from passing through. That is, exhaust gas untreated by the catalytic filter flows into the substrate channels (i.e., the filter inlet) where it contacts the upstream side of a substrate wall. During operation of an engine, a pressure differential exists between the inlet and outlet faces of the substrate (higher pressure at the inlet face relative to the outlet face), and thus a pressure differential also exists between the upstream side and downstream side of the substrate wall. This pressure differential, along with the gas permeable nature of the walls, allows the exhaust gas that flows into a channel which is open to the inlet face, to pass from the upstream side of a porous wall to the downstream side of that wall, and then into an adjacent channel (i.e., filter outlet) which is open to the downstream section of the exhaust system. Wall flow filters useful in the present invention have up to about 108.5 cells per square centimetre (700 channels (cells) per square inch) of cross section. The wall-flow filter can contain about 15.5 to 62.0 cells per square centimetre (100 to about 400 cells per square inch ("cpsi")).

During normal operation of the exhaust system, soot and other particulates accumulate on the upstream, or inlet, sides of the filter which leads to an increase in backpressure. To alleviate this increase in backpressure, the filter substrates are continuously, i.e. passively, or periodically (i.e. actively) regenerated by combusting the accumulated soot. The combustion process is promoted by the catalyst provided on the filter substrate which makes it into a CSF.

The Pd-rich catalyst composition can be incorporated into or onto a filter by any practical means. For example, a washcoat comprising the catalyst can be applied to the inlet side (face) of the filter. The method of applications and the properties of the washcoat can be modified using techniques known to one skilled in the art, such as the application of pressure or a vacuum. After the washcoat is applied, it is dried and then calcined. The temperature and length of time used in the calcination can vary depending upon the specific soot catalyst used. Calcination can be performed at a temperature of about 400° C. to about 600° C. for about 1 to about 3 hours. In some combinations of the soot catalyst and the SCR catalyst, the catalytic coating can be activated, preferably at a temperature of about 100° C. to about 300° C. for about 1 to about 3 hours.

The CSF comprises palladium and, optionally, platinum, wherein a weight ratio of palladium to platinum in the CSF is greater than 1:1. Where the CSF contains only Pd as the PGM component, which is the most-preferred embodiment, it is referred to herein as Pd-only. Where the CSF contains an amount of Pt, albeit less by weight than the amount of Pd, the CSF is referred to as Pd-rich. For the comparative examples which contain Pt≥Pd, these are referred to herein as Pt-rich.

Preferably the weight ratio of palladium to platinum in the CSF is greater than 2:1, preferably greater than 3:1, preferably greater than 5:1 and preferably greater than 6:1. Since the presence of Pt can cause NOx remake and N₂O production, it is preferred that the amount of Pt present is minimised. It is preferred that there is substantially no Pt present and it is most preferred that the CSF is Pd-only, i.e. Pd is the only platinum group metal present in the CSF.

According to the invention, a total platinum group metal content of the CSF consists of palladium and, optionally, platinum, and preferably consists of palladium. According to the invention, the CSF has a total platinum group metal loading of from 0.011 to 0.071 g/L (0.3 to 2g/ft³). These loadings are typically lower than the total platinum group metal content of conventional Pt-containing CSF components. Preferably the Pd content is from 0.011 to 0.071 g/L (0.3 to 2g/ft³).

Preferably the filter substrate of the CSF is coated on the inlet and/or outlet as a single-layer catalyst composition. This is quite different from a conventional ASC composition which is generally provided as a two-layer catalyst structure with an SCR composition overlying a PGM-containing composition.

Preferably the system does not contain an ammonia slip catalyst (ASC) upstream of the CSF. Preferably the system does not contain an ammonia slip catalyst (ASC), i.e. at all.

For the avoidance of doubt, an ASC is typically a two-layer coating (NH₃ oxidation underlayer with, for example, PGM on a support and NOx reduction top layer with, for example, Cu/Fe on a zeolite or a blend of NOx reduction and NH₃ oxidation catalyst). Both layers in a conventional ASC each have high washcoat loadings of 91.5-213.6 g/L (1.5-3.5 g/in³), whereas the present CSF on the other hand preferably has an extremely low washcoat loading (preferably 6.1-18.3 g/L (0.1-0.3 g/in³)). The inventors have realised that any backpressure penalty in the system would be reduced by sole use of CSF with NH₃ oxidation functionality versus incorporating a separate ASC which has intrinsically much higher washcoat loading.

Preferably the platinum group metal can be supported on a high surface area washcoat component such as alumina, a zeolite such as an aluminosilicate zeolite, silica, non-zeolite silica alumina, ceria, zirconia, titania or a mixed or composite oxide containing both ceria and zirconia.

Preferably the CSF is the only filter in the system. This is desirable since a filter component acts as a considerable heatsink and, especially were another filter upstream of the CSF then this might reduce the observed operating temperatures and spoil the efficacy of the system.

### The DOC

In some embodiments there is further provided a diesel oxidation catalyst (DOC) upstream of the first means for injecting a nitrogenous reductant. The diesel oxidation catalyst (DOC) is to oxidize a hydrocarbon based soluble organic fraction (SOF) and carbon monoxide content of diesel exhaust by simple oxidation:

CO + ½O₂ → CO₂

[HC] + O₂ → CO₂ + H₂O

The DOC may also serve to oxidize NO into NO₂, which in turn, may be used to oxidize particulate matter in the CSF. Additionally, the DOC may serve to reduce the particulate matter (PM) in the exhaust gas.

The DOC can be adapted to yield a gas stream entering the SCR zeolite catalyst having a ratio of NO to NO₂ of from about 4:1 to about 1:3 by volume, e.g. at an exhaust gas temperature at oxidation catalyst inlet of 250° C to 450° C.

The DOC can include at least one platinum group metal (or a combination of two or more of these metals), such as platinum, palladium, or rhodium, coated on a flow-through monolith substrate. Other metal catalysts that can be used in the DOC include aluminium, barium, cerium, alkali metals, alkaline-earth metals, rare-earth metals, or combinations of two or more thereof. The at least one platinum group metal can be platinum, palladium or a combination of both platinum and palladium. The platinum group metal can be supported on a high surface area washcoat component such as alumina, a zeolite such as an aluminosilicate zeolite, silica, non-zeolite silica alumina, ceria, zirconia, titania or a mixed or composite oxide containing both ceria and zirconia. The diesel oxidation catalyst composition can contain about 0.353 to 4.24 g/L (10 to 120 g/ft³) of a platinum group metal (e.g., platinum, palladium or rhodium) dispersed on a high surface area, refractory oxide support (e.g., γ-alumina).

### Applications

According to a further aspect there is provided a vehicle comprising a lean burn internal combustion engine and the exhaust system as described herein. Preferably the engine is a diesel engine. Preferably the components (i)-(iii) are close-coupled to the engine and the component (iv) is arranged in an underfloor location. The provision of the components (i)-(iii) in close proximity to the engine (i.e. not in an underfloor location) helps to ensure that the CSF is operating at a sufficiently high temperature to achieve optimal performance. As shown in the Examples below, optimum benefits are observed under hot test cycles.

According to a further aspect there is provided a method for the treatment of an exhaust gas from a vehicular lean burn internal combustion engine, the method comprising passing the exhaust gas through a system as described herein.

### Definitions

As used herein, the singular form of "a", "an" and "the" include plural references unless the context clearly dictates otherwise.

The use of the term "comprising" is intended to be interpreted as including such features but not excluding other features and is also intended to include the option of the features necessarily being limited to those described. In other words, the term also includes the limitations of "consisting essentially of" (intended to mean that specific further components can be present provided they do not materially affect the essential characteristic of the described feature) and "consisting of" (intended to mean that no other feature may be included such that if the components were expressed as percentages by their proportions, these would add up to 100%, whilst accounting for any unavoidable impurities), unless the context clearly dictates otherwise.

As used herein, the term "on" is intended to mean "directly on" such that there are no intervening layers between one material being said to be "on" another material. Spatially relative terms, such as "below", "beneath", "lower", "above", "upper" and the like, may be used herein for ease of description to describe one element or feature's relationship to another element(s) or feature(s). It will be understood that the spatially relative terms are intended to encompass different orientations of the catalyst in use or operation in addition to the orientation depicted in the figures.

The US06 test cycle (officially, the US06 Supplemental Federal Test Procedure (SFTP)) is a test cycle intended to represent aggressive, high speed and/or high acceleration driving behaviour, rapid speed fluctuations and driving behaviour following start-up. Details of the US06 test cycle can be found on DieselNet.com at the following link: https://dieselnet.com/standards/cycles/ftp_us06.php.

The US06 test cycle is done immediately following the conclusion of the FTP-75 (Federal Test Procedure-75), which comprises three phases: a first cold-start phase, a second stabilised phase and a third hot-start phase. Details of the FTP-75 test cycle can be found on DieselNet.com at the following link: https://dieselnet.com/standards/cycles/ftp75.php. Reference to emissions from the FTP-75 test cycle herein is to emissions detected only during that FTP-75 test cycle and not including any emissions detected during any phases following the FTP-75 test cycle, such as the US06 test cycle.

The US06 test cycle is sometimes referred to as the "fourth phase" of the FTP-75. A US06 test cycle that is a "fourth phase" of the FTP-75, i.e. a US06 test cycle done immediately following the conclusion of the FTP-75 test cycle is referred to herein as a "standard US06 test cycle" and reference to emissions during the "standard US06 test cycle" is to emissions detected only during that "standard US06 test cycle" and not including any emissions detected during the preceding FTP-75 phases or any test cycles conducted following the completion of the "standard US06 test cycle".

A "hot US06 test cycle" herein is defined as an additional US06 test cycle begun immediately following the conclusion of the preceding "standard US06 test cycle", i.e. while the engine is still hot. Reference to emissions from the "hot US06 test cycle" is to emissions detected only during that "hot US06 test cycle" and not including any emissions detected during the preceding "standard US06 test cycle" or any test cycles following the completion of the "hot US06 test cycle".

### Figures

The invention will now be described further in the following figures. In which:
Figure 1 shows an exemplary system according to the disclosure herein.

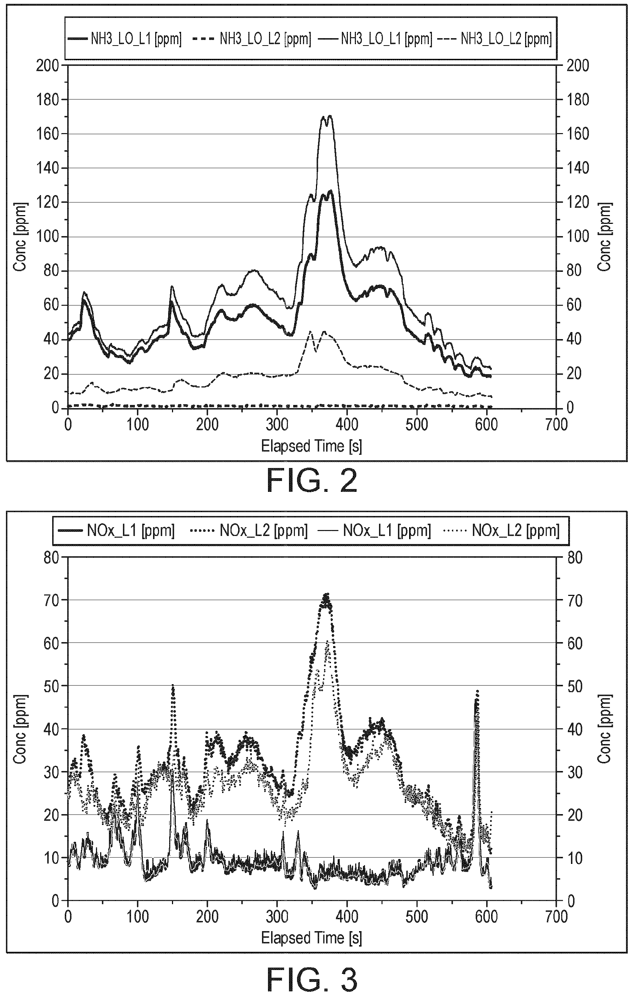

Figure 2 compares a Pd-only CSF against a Pt rich Pt/Pd CSF (2:1). The plot shows the measured levels of NH₃ at the inlet and outlet of these CSFs. The solid lines are the inlet values and the dashed lines are the outlet values. The lines for the Pd-only CSF are higher in both instances. The testing was a "Hot US06" cycle.
Figure 3 compares a Pd-only CSF against a Pt-rich Pt/Pd CSF (2:1). The plot shows the measured levels of NOx at the inlet and outlet of these CSFs. The solid lines are the inlet values and the dashed lines are the outlet values. The inlet lines for both CSF are entirely overlapping. The outlet lines are generally lower for the Pd-only CSF in all instances. The testing was a "Hot US06" cycle.

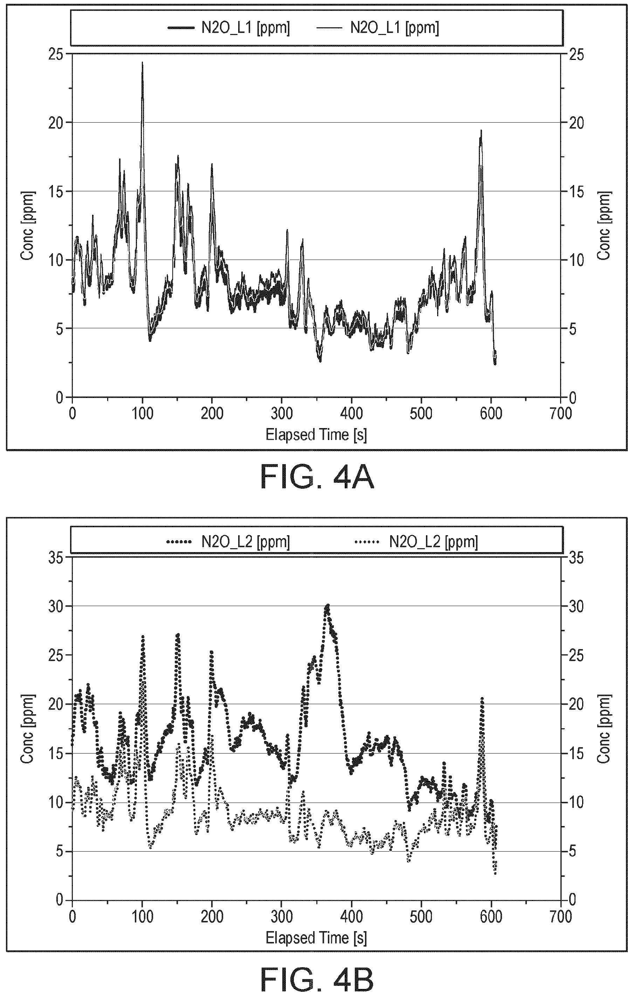

Figures 4a and 4b compares a Pd-only CSF against a Pt-rich Pt/Pd CSF (2:1). The plot shows the measured levels of N₂O at the inlet (Figure 4a) and outlet (Figure 4b) of these CSFs. The solid lines are the inlet values and the dashed lines are the outlet values. The lines for the Pd-only CSF are substantially identical at the inlet and outlet. The lines for the Pt-containing CSF are substantially higher at the outlet. The testing was a "Hot US06" cycle.

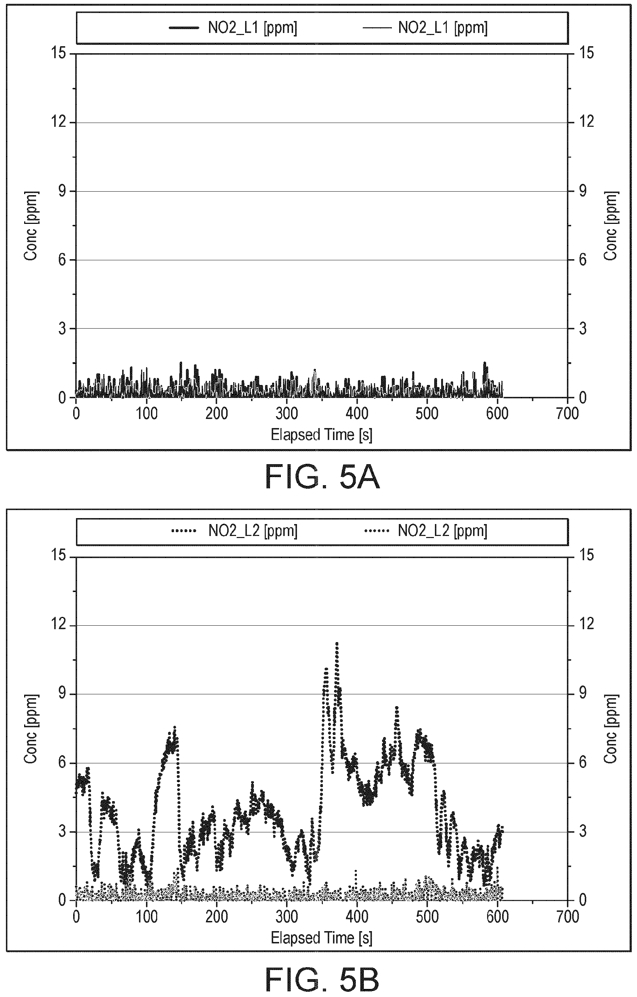

Figures 5a and 5b compares a Pd-only CSF against a Pt-rich Pt/Pd CSF (2:1). The plot shows the measured levels of NO₂ at the inlet (Figure 5a) and outlet (Figure 5b) of these CSFs. The solid lines are the inlet values and the dashed lines are the outlet values. The only line which is not substantially zero is that for the Pt-containing CSF which produces significant levels of NO₂. The testing was a "Hot US06" cycle.

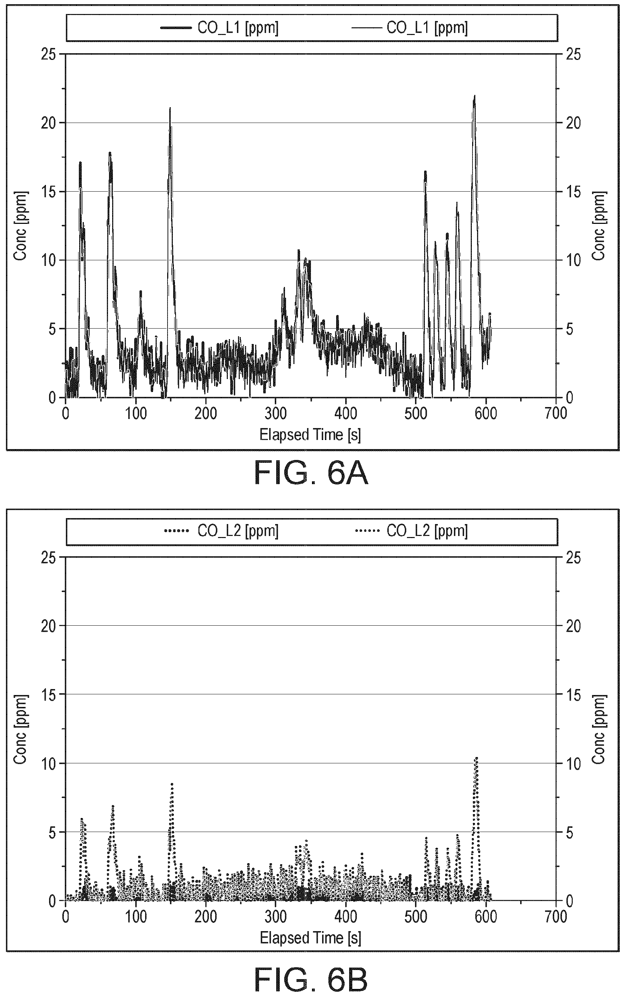

Figures 6a and 6b compares a Pd-only CSF against a Pt-rich Pt/Pd CSF (2:1). The plot shows the measured levels of CO at the inlet (Figure 6a) and outlet (Figure 6b) of these CSFs. The solid lines are the inlet values and the dashed lines are the outlet values. The lines show substantially identical CO conversion for both CSF. The testing was a "Hot US06" cycle.

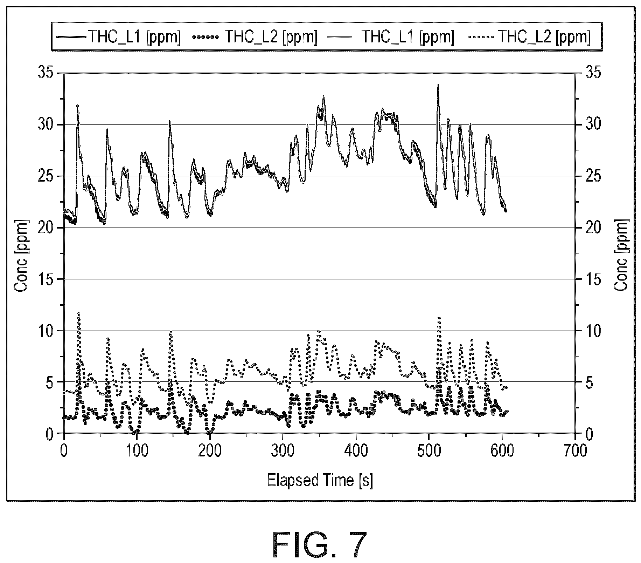

Figure 7 compares a Pd-only CSF against a Pt-rich Pt/Pd CSF (2:1). The plot shows the measured levels of HC at the inlet and outlet of these CSFs. The solid lines are the inlet values and the dashed lines are the outlet values. The inlet lines are substantially identical and high, whereas the outlet lines show HC being treated. The lines for the Pd-only CSF show increased HC slip compared to the Pt-containing CSF. The testing was a "Hot US06" cycle.

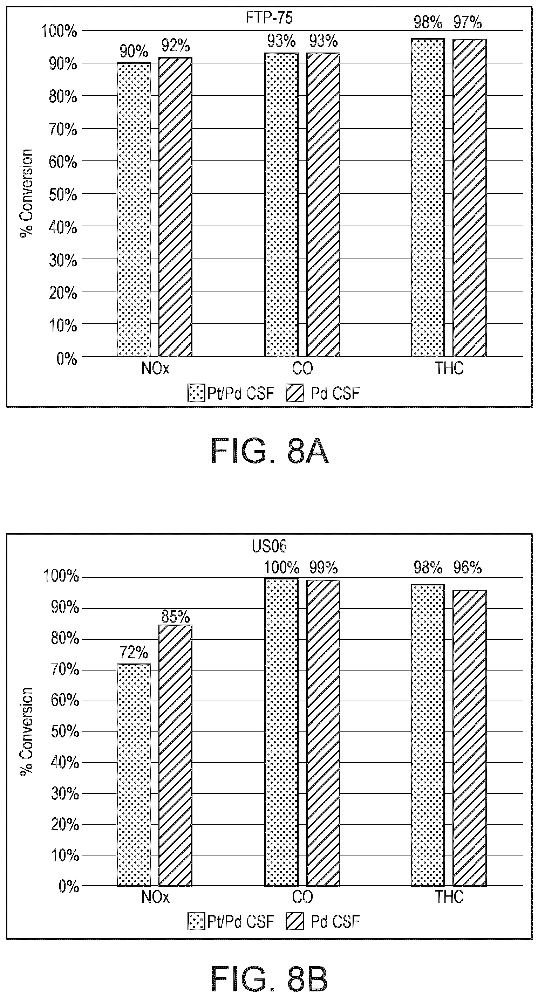

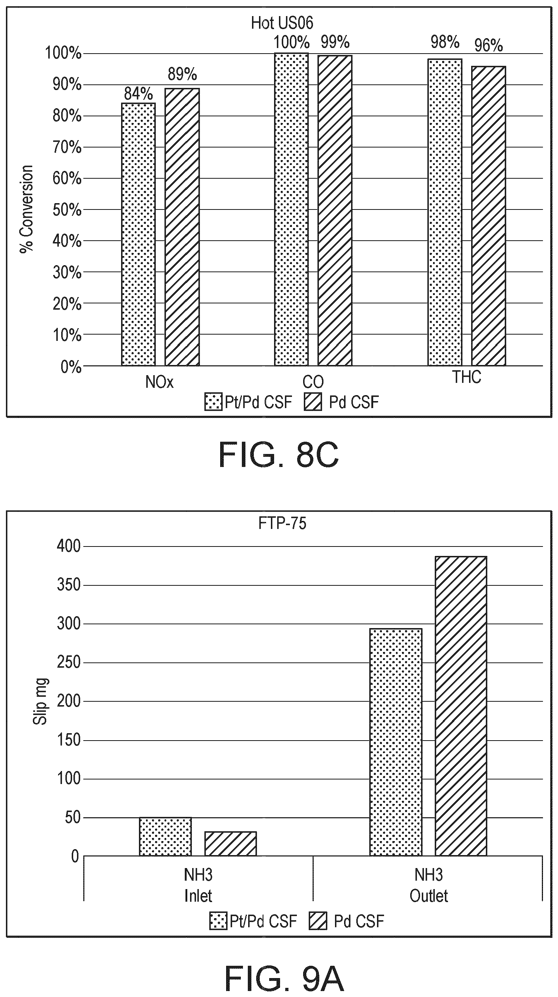

Figures 8a, 8b and 8c show NOx, CO and total HC conversion across the three test cycles: FTP-75, standard US06 and hot US06 respectively. In each instance the left-hand column is the Pt-containing CSF and the right-hand is the Pd-only CSF.

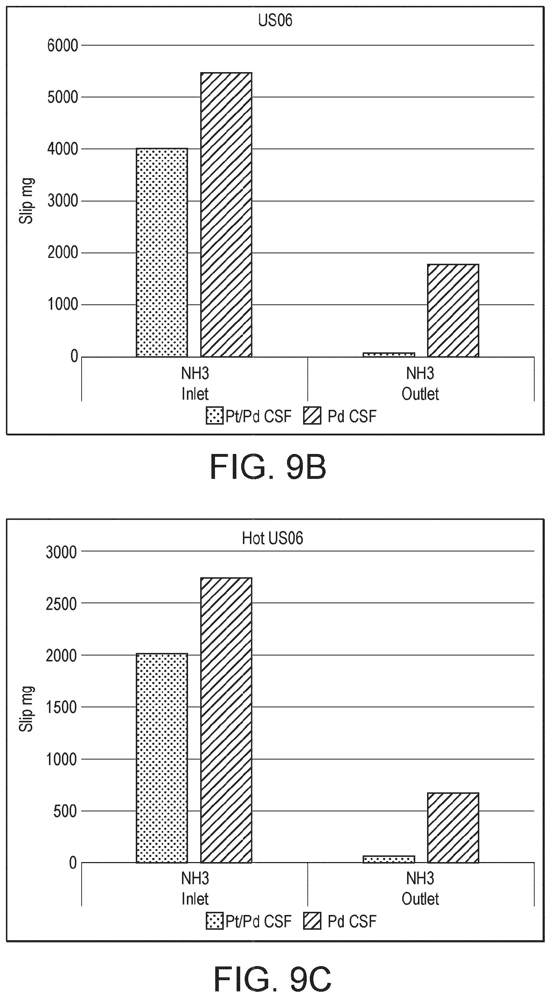

Figures 9a, 9b and 9c show NH₃ slip across the three test cycles: FTP-75, standard US06 and "Hot US06" respectively. In each instance the left-hand column is the Pt-containing CSF and the right-hand is the Pd-only CSF.

According to the system shown in Figure 1, there is provided, in order, an engine which is producing an exhaust gas to be treated; a close-coupled DOC; a first nitrogenous injector (urea doser 1); a first SCR component (SCR 1); a Pd-rich or Pd-only CSF (CSF); a second nitrogenous injector (urea doser 2); a second SCR component (SCR 2); and, optionally, a third SCR component (SCR 3); after which the treated exhaust gases are released to the atmosphere.

### Examples

The invention will now be described further in relation to the following non-limiting examples.

Two systems were set up for testing. A system was prepared using a sub-7L 2011 diesel engine. The system had, in order, the following components:
1. An aged DOC close-coupled to the engine,
2. A first nitrogenous reductant injector,
3. A first aged SCR,
4. Either an aged CSF having Pt and Pd in a 2:1 ratio with a 0.071 g/L (2g/ft³) loading, or an aged CSF having Pd-only at a loading of 0.024 g/L (0.67g/ft³). Both CSF therefore have the same Pd-loading.
5. A second nitrogenous reductant injector,
6. A second aged SCR,
7. A third aged SCR.

The testing performed utilised standard test protocols, including a Cold FTP-75, a standard US06 and a "hot" US06 performed immediately after the standard US06 without a cooling period.

The testing results are shown in the Figures 2-9.

As shown in Figure 2, the Pd-only CSF converts less ammonia than the Pt-rich (Pt/Pd), calculated to be 97% (Pt-rich CSF) vs 73% (Pd-only CSF) across the hot US06 cycle. As shown in Figure 3, with similar levels of inlet NOx, the Pd-only CSF releases a lower level of NOx at the outlet, indicating lower amount of NOx re-make due to more selective oxidation of NH₃.

As shown in Figures 4a-b, the Pd-only CSF does not produce significant levels of N₂O in comparison to the Pt-rich (Pt/Pd) CSF.

As shown in Figures 5a-b, the Pd-only CSF does not produce significant levels of NO₂ in comparison to the Pt-rich (Pt/Pd) CSF.

As shown in Figures 6a-b, the CO performance is not compromised by the change in CSF.

As shown in Figure 7, the Pd-only CSF slips a slightly increased amount of HC; which is not impacting the overall conversion due to the low level of concentration detected.

As shown in Figures 8a-c, CO and HC performance is substantially similar across the tests on both CSFs, but the NOx conversion is significantly higher under the US06 test cycles with Pd-only CSF.

As shown in Figures 9a-c, the Pd-only CSF selectively converts less NH₃ to N₂O and NOx compared to the Pt-rich (Pt/Pd) CSF yet reduces NH₃ slip considerably in hot conditions. The slipped NH₃ can be used in the downstream SCR component.

The Table below summaries the CSF inlet temperature for the inventive Pd-only CSF compared to the comparative Pt-rich (Pt/Pd) CSF. The greatest benefits of the invention are shown in the HOT US06 cycles where the inlet temperatures are greatest.

**Table 1**

| | Average CSF Inlet Temperature (°C) | Maximum CSF Inlet Temperature (°C) |
|---|---|---|
| FTP-75 | | |
| Pt/Pd CSF | 224 | 297 |
| Pd CSF | 225 | 303 |
| | | |
| US06 | | |
| Pt/Pd CSF | 292 | 323 |
| Pd CSF | 292 | 322 |
| | | |
| Hot US06 | | |
| Pt/Pd CSF | 302 | 326 |
| Pd CSF | 301 | 325 |

The foregoing detailed description has been provided by way of explanation and illustration and is not intended to limit the scope of the appended claims. Many variations in the presently preferred embodiments illustrated herein will be apparent to one of ordinary skill in the art and remain within the scope of the appended claims.

## Claims

1. A system for treating an exhaust gas from a vehicular lean burn internal combustion engine, the system comprising, in order:
(i) a first means for injecting a nitrogenous reductant;
(ii) a first selective catalytic reduction (SCR) catalyst;
(iii) a catalysed soot filter (CSF) comprising a filter substrate; and
(iv) a second selective catalytic reduction (SCR) catalyst,
wherein a total platinum group metal content of the CSF is from 0.011 to 0.071 g/L (0.3 to 2g/ft³), and the CSF comprises palladium only or both palladium and platinum, wherein when the CSF comprises both palladium and platinum a weight ratio of palladium to platinum is greater than 1:1.

2. The system according to claim 1, further comprising:
(v) a second means for injecting a nitrogenous reductant arranged between the CSF and the second SCR catalyst.

3. The system according to claim 1 or claim 2, wherein the components are provided without any intervening further catalyst or filter articles or intervening further means for injection.

4. The system according to any preceding claim, wherein the weight ratio of palladium to platinum in the CSF is greater than 2:1, preferably greater than 5:1.

5. The system according to any preceding claim, wherein a total platinum group metal content of the CSF consists of palladium and, optionally, platinum, and preferably consists of palladium.

6. The system according to any preceding claim, wherein the palladium, and optional platinum, is supported on an alumina, silica, non-zeolite silica alumina, zirconia or titania high surface area washcoat component.

7. The system according to any preceding claim, wherein the platinum group metal is supported on a high surface area washcoat component coated on the inlet and/or outlet of the filter substrate of the CSF as a single-layer catalyst composition.

8. The system according to claim 1 or 2, wherein the system does not contain an ammonia slip catalyst (ASC) upstream of the CSF and preferably wherein the system does not contain an ammonia slip catalyst (ASC).

9. The system according to claim 1 or 2, wherein there is further provided a diesel oxidation catalyst (DOC) upstream of the first means for injecting a nitrogenous reductant.

10. The system according to claim 1 or 2, wherein the CSF is the only filter in the system.

11. The system according to any preceding claim, wherein the filter substrate of the CSF is a wall-flow filter.

12. A vehicle comprising a lean burn internal combustion engine and the exhaust system according to any preceding claim, preferably wherein the components (i)-(iii) are close-coupled to the engine and the component (iv) is arranged in an underfloor location.

13. A method for the treatment of an exhaust gas from a vehicular lean burn internal combustion engine, the method comprising passing the exhaust gas through a system according to any of claims 1 to 11.

14. The method according to claim 13, wherein overall NOx conversion across the system is higher on a US06 test cycle compared to the same system except having a CSF containing greater than or equal to 1:1 Pt to Pd at the same total CSF PGM loading.

15. The method according to claim 14, wherein the US06 test cycle is a hot US06 test cycle.

## Patentansprüche

1. System zum Behandlung eines Abgases aus einem Fahrzeugmagerverbrennungsmotor, das System umfassend, in folgender Reihenfolge:
(i) ein erstes Mittel zum Einspritzen eines stickstoffhaltigen Reduktionsmittels;
(ii) einen ersten Katalysator für selektive katalytische Reduktion (SCR);
(iii) einen katalysierten Rußfilter (CSF), umfassend ein Filtersubstrat; und
(iv) einen zweiten Katalysator für selektive katalytische Reduktion (SCR),
wobei ein Gesamtplatingruppenmetallgehalt des CSF von 0,011 bis 0,071 g/l (0,3 bis 2 g/ft³) beträgt und der CSF nur Palladium oder sowohl Palladium als auch Platin umfasst, wobei, wenn der CSF sowohl Palladium als auch Platin umfasst, ein Gewichtsverhältnis von Palladium zu Platin größer als 1 : 1 ist.

2. System nach Anspruch 1, ferner umfassend:
(v) ein zweites Mittel zum Einspritzen eines stickstoffhaltigen Reduktionsmittels, das zwischen dem CSF und dem zweiten SCR-Katalysator angeordnet ist.

3. System nach Anspruch 1 oder 2, wobei die Komponenten ohne jegliche dazwischenliegende weitere Katalysator- oder Filtererzeugnisse oder dazwischenliegende weitere Mittel für eine Einspritzung bereitgestellt sind.

4. System nach einem der vorstehenden Ansprüche, wobei das Gewichtsverhältnis von Palladium zu Platin in dem CSF größer als 2 : 1, vorzugsweise größer als 5 : 1, ist.

5. System nach einem der vorstehenden Ansprüche, wobei ein Gesamtplatingruppenmetallgehalt des CSF aus Palladium und optional Platin besteht und vorzugsweise aus Palladium besteht.

6. System nach einem der vorstehenden Ansprüche, wobei das Palladium und optional das Platin auf einer Aluminiumoxid-, Siliciumdioxid-, Nicht-Zeolith-Siliciumdioxid-Aluminiumoxid-, Zirconiumdioxid- oder Titandioxid-Washcoat-Komponente mit hohem Oberflächenbereich geträgert ist.

7. System nach einem der vorstehenden Ansprüche, wobei das Platingruppenmetall auf einer Washcoat-Komponente mit hohem Oberflächenbereich geträgert ist, die auf den Einlass und/oder Auslass des Filtersubstrats des CSF als eine einschichtige Katalysatorzusammensetzung aufgetragen ist.

8. System nach Anspruch 1 oder 2, wobei das System keinen Ammoniakschlupfkatalysator (ASC) stromaufwärts des CSF enthält und wobei das System vorzugsweise keinen Ammoniakschlupfkatalysator (ASC) enthält.

9. System nach Anspruch 1 oder 2, wobei ferner ein Dieseloxidationskatalysator (DOC) stromaufwärts des ersten Mittels zum Einspritzen eines stickstoffhaltigen Reduktionsmittels bereitgestellt ist.

10. System nach Anspruch 1 oder 2, wobei der CSF der einzige Filter in dem System ist.

11. System nach einem der vorstehenden Ansprüche, wobei das Filtersubstrat des CSF ein Wandstromfilter ist.

12. Fahrzeug, umfassend einen Magerverbrennungsmotor und das Abgassystem nach einem der vorstehenden Ansprüche, wobei die Komponenten (i)-(iii) vorzugsweise direkt mit dem Motor gekoppelt sind und die Komponente (iv) in einer Unterbodenposition angeordnet ist.

13. Verfahren für die Behandlung eines Abgases aus einem Fahrzeugmagerverbrennungsmotor, das Verfahren umfassend ein Leiten des Abgases durch ein System nach einem der Ansprüche 1 bis 11.

14. Verfahren nach Anspruch 13, wobei eine gesamte NOx-Umwandlung über das System in einem US06-Testzyklus im Vergleich mit dem gleichen System höher ist, außer dass es einen CSF aufweist, der größer als oder gleich 1 : 1 Pt zu Pd bei der gleichen Gesamt-CSF-PGM-Beladung enthält.

15. Verfahren nach Anspruch 14, wobei der US06-Testzyklus ein heißer US06-Testzyklus ist.

## Revendications

1. Système de traitement de gaz d'échappement d'un moteur à combustion interne de véhicule à mélange pauvre, le système comprenant, dans l'ordre :
(i) un premier moyen d'injection d'un réducteur azoté ;
(ii) un premier catalyseur de réduction catalytique sélective (SCR) ;
(iii) un filtre à suie catalysé (CSF) comprenant un substrat filtrant ; et
(iv) un second catalyseur de réduction catalytique sélective (SCR),
dans lequel la teneur totale en métaux du groupe du platine du CSF est comprise entre 0,011 et 0,071 g/L (0,3 et 2 g/pieds³), et le CSF comprend uniquement du palladium ou à la fois du palladium et du platine, dans lequel lorsque le CSF comprend à la fois du palladium et du platine, le rapport pondéral entre le palladium et le platine est supérieur à 1:1.

2. Système selon la revendication 1, comprenant en outre :
(v) un second moyen d'injection d'un réducteur azoté agencé entre le CSF et le second catalyseur SCR.

3. Système selon la revendication 1 ou la revendication 2, dans lequel les composants sont fournis sans autre catalyseur ou article filtrant intervenant, ni autre moyen d'injection intervenant.

4. Système selon l'une quelconque revendication précédente, dans lequel le rapport pondéral entre le palladium et le platine dans le CSF est supérieur à 2:1, de préférence supérieur à 5:1.

5. Système selon l'une quelconque revendication précédente, dans lequel la teneur totale en métaux du groupe du platine du CSF est constituée de palladium et, éventuellement, de platine, et de préférence de palladium.

6. Système selon l'une quelconque revendication précédente, dans lequel le palladium, et éventuellement le platine, est supporté par un composant d'alumine, de silice, d'alumine de silice non zéolite, de zircone ou de titane à grande surface de lavage.

7. Système selon l'une quelconque revendication précédente, dans lequel le métal du groupe du platine est supporté par un composant de couche de lavage à grande surface, enduit sur l'entrée et/ou la sortie du substrat filtrant du CSF sous la forme d'une composition catalytique monocouche.

8. Système selon la revendication 1 ou 2, dans lequel le système ne contient pas de catalyseur de glissement d'ammoniac (ASC) en amont du CSF et, de préférence, dans lequel le système ne contient pas de catalyseur de glissement d'ammoniac (ASC).

9. Système selon la revendication 1 ou 2, dans lequel un catalyseur d'oxydation diesel (DOC) est également prévu en amont du premier moyen d'injection d'un réducteur azoté.

10. Système selon la revendication 1 ou 2, dans lequel le CSF est le seul filtre du système.

11. Système selon l'une quelconque revendication précédente, dans lequel le substrat filtrant du CSF est un filtre à écoulement mural.

12. Véhicule comprenant un moteur à combustion interne à mélange pauvre et le système d'échappement selon l'une quelconque revendication précédente, de préférence dans lequel les composants (i)-(iii) sont couplés étroitement au moteur et le composant (iv) est agencé dans un emplacement sous le plancher.

13. Procédé de traitement de gaz d'échappement d'un moteur à combustion interne à mélange pauvre, le procédé comprenant le passage du gaz d'échappement dans un système selon l'une quelconque des revendications 1 à 11.

14. Procédé selon la revendication 13, dans lequel la conversion globale des NOx dans le système est plus élevée lors d'un cycle d'essai US06 par rapport au même système, à l'exception d'un CSF contenant un rapport Pt/Pd supérieur ou égal à 1:1, à la même charge totale de PGM dans le CSF.

15. Procédé selon la revendication 14, dans lequel le cycle d'essai US06 est un cycle d'essai US06 à chaud.
